# EUROPEAN PATENT APPLICATION

(11) **EP 1 345 028 A1**
(43) Date of publication of application: **17.09.2003**
(21) Application number: 03004825.0
(22) Date of filing: 05.03.2003
(51) Int. Cl.: G01N 33/483, G01N 30/72

(54) **Method for charcterizing metabolites using hydrogen/deuterium exchange**

(30) Priority: 14.03.2002 US 364373 P
(71) Applicant: Warner-Lambert Company LLC, Morris Plains, New Jersey 07950 (US)
(72) Inventor: Lam, Wing Wah, Ann Arbor, Michigan 48105 (US); Ramanathan, Ragulan, Kendall Park, New Jersey 08824 (US)
(74) Representative: Tesch, Rudolf

(57) **Abstract**

A system and method for performing hydrogen/deuterium (H/D) exchange in an electrospray ionization (ESI) source is described. The system includes a liquid chromatograph-mass spectrometer (LC-MS), which is equipped with an ESI source that provides for introduction of a sheath liquid. The resulting system employs deuterated solvent, such as deuterium oxide, as the sheath liquid, which allows H/D exchange experiments to be performed on-line. This directly provides information for determining the number and position of exchangeable hydrogens, aiding in the elucidation of the structures of drug metabolites.

## Description

### CROSS-REFERENCE TO RELATED APPLICATION

The present application claims the benefit of U.S. Provisional Patent Application No. 60/364,373, filed March 14, 2002, which is herein incorporated by reference in its entirety for all purposes.

### BACKGROUND OF THE INVENTION

### FIELD OF INVENTION

The present invention relates to systems and methods for characterizing metabolites, and more particularly to an LC-MS or an LC-MS/MS having an electrospray ionization source, which is used to detect hydrogen/deuterium exchange in drug metabolites.

### DISCUSSION

Pharmaceutical researchers continually scrutinize the drug discovery process to increase the number of successful drug candidates for pre-clinical, clinical and commercial development. *See, e.g.,* M. A. Siddiqui, "Improving Drug R&D Efficiency," *Chem. Eng. News* 275 (March 26, 2001). Recent advances in combinatorial chemistry have allowed medicinal chemists to generate vast numbers of new chemical entities, which can be screened for pharmaceutical activity. A. Czarnik, "Combinatorial Chemistry," 70 *Anal. Chem.* 378A-386A (1998). However, the pharmaceutical industry has recognized that it must improve other areas of the drug discovery process to fully realize the benefits of combinatorial methods.

One such area for improvement is in drug metabolism, which plays an important role in the drug discovery process. M. Bertrand et al., "Rapid Assessment of Drug Metabolism in the Drug Discovery Process," 11 *Europ. J. Pharma. Sci.* S61-S72 (2000). The identification of drug metabolites during the early stage of development can help medicinal chemists block some of the metabolic "hot spots," thereby producing a drug that is more difficult to metabolize, as evidenced by greater half-life. Rapid identification of drug metabolites is therefore imperative for drug development. *See,* H. Zhang et al., "Application of Atmospheric Pressure Ionization Time-of-Flight Mass Spectrometry Coupled with Liquid Chromatography for the Characterization of in Vitro Drug Metabolites," 72 *Anal. Chem.* 3342-3348 (2000); K. A. Cox et al., "Higher Throughput Metabolite Identification in Drug Discovery: Current Capabilities and Future Trends," 4 *Amer. Pharm. Rev.* 45-52 (2001).

Hydrogen/deuterium (H/D) exchange is a well-established technique for studying structure, stability, folding dynamics and intermolecular interactions of proteins in solution. S. W. Englander et al., "Mechanisms and Uses of Hydrogen Exchange," 6 *Curr. Opin. Struct. Biol.* 18-23 (1996). During solution phase H/D exchange, labile protons on side chains and on amide moieties, which are not protected from solution, generally exchange rapidly. Exchanges of these unprotected hydrogens occur on the order of 10⁻¹ to 10⁰ exchanges per second under the experimental conditions described in the cited studies. If, however, amide or side chain hydrogens are protected from solution (*e.g*., when they are hydrogen-bonded in structurally stable secondary-structure elements), the exchange rates can be considerably reduced.

Methods in which H/D exchange experiments are combined with either nuclear magnetic resonance (NMR) spectroscopy or mass spectrometry (MS) are also well established. *See, e.g.,* Y. Bai, "Protein Folding Intermediates: Native-State Hydrogen Exchange," 269 *Science* 192-197 (1995); A. Miranker et al., "Detection of Transient Protein Folding Populations by Mass Spectrometry," 262 *Science* 896-899 (1993). NMR methods, when coupled with H/D exchange are ideal for monitoring individual residues or each amide hydrogen, but are limited to highly purified proteins or metabolites that are soluble at high concentrations. This severely reduces the possibility of determining structural features of drugs and metabolites that are in the discovery stage of development since the chemical entities are only available in limited quantities.

Methods involving mass spectrometry have advantages stemming from the inherent sensitivity and selectivity of mass spectrometers. In the early 1970s, Hunt and co-workers showed that under chemical ionization (CI) conditions, H/D exchange can be rapidly achieved using CH₃OD or ND₃ as a reagent gas. D. F. Hunt et al., "Chemical Ionization Mass Spectrometry II: Differentiation of Primary, Secondary, and Tertiary Amines," *Tetrahedron Lett.* 4539 (1971). Later, Hunt and Sethi showed that the proton affinity difference between the analyte and the reagent gas is a major factor in determining the degree of exchange in chemical ionization mass spectrometry. D. F. Hunt and S. K. Sethi, "Gas-Phase Ion/Molecule Isotope-Exchange Reactions: Methodology for Counting Hydrogen Atoms in Specific Organic Structural Environments by Chemical Ionization Mass Spectrometry," 102 *J. Am. Chem. Soc.* 6953-6963 (1980). Isotopic exchange studies performed in a collision cell of a tandem mass spectrometer (MS/MS) was used to show that CH₃OD exchanged specific acidic hydrogens of phenols and carboxylic acids but not the amino hydrogens. A. Ranasinghe et al., "Selective Isotopic Exchange of Polyfunctional Ions in Tandem Mass Spectrometry: Methodology, Applications and Mechanism," 27 *Org. Mass Spectrom.* 77-88 (1992). Gas-phase H/D exchange kinetics of several protonated amino acids and dipeptides have also been reported. E. Gard et al., "Gas-phase Hydrogen/Deuterium Exchange as a Molecular Probe for the Interaction of Methanol and Protonated Peptides," 5 *J. Am. Soc. Mass Spectrom.* 623-631 (1994).

Although limited in scope and in number, H/D exchange reactions have been used in the structural studies in combination with fast atom bombardment (FAB), Frit-FAB, and thermospray ionization techniques. *See,* T. McLean et al., "Deuteriated Solvents in High Performance Liquid Chromatography-Fast Atom Bombardment Mass Spectrometry," 15 *J*. *Chem. Soc. Chem. Commun*. 1773-1775 (1992); P. O. Edlund, "Identification of Amperozide Metabolites in Urine from Rats, Rabbits, Dogs, and Man by Frit-FAB LC/MS using Deuterated Solvents to Gain Additional Structural Information," 30 *J. Mass Spectrom.* 1380-1392 (1995); M. M. Siegel, "Hydrogen-Deuterium Exchange Studies Utilizing a Thermospray Mass Spectrometer Interface," 60 *Anal. Chem.* 2090-2095 (1988); and C. G. Edmonds et al., "Thermospray Liquid Chromatography/Mass Spectrometry in Deuterium Oxide," 60 *Anal. Chem.* 2314-2317 (1988).

Hydrogen/deuterium exchange studies involving mass spectrometers having an electrospray ionization (ESI) source are relatively new. Early studies by Katta and Chait demonstrated that charge state distribution of proteins in ESI mass spectra, to some degree, reflects the extent of protonation of proteins in solution, and therefore ESI spectra could be used to study conformational changes of proteins in solution. V. Katta and B. T. Chait, "Conformational Changes in Proteins Probed by Hydrogen-Exchange Electrospray-Ionization Mass Spectrometry," 5 *Rapid Commun. Mass Spectrom.* 214-217 (1991); V. Katta and B. T. Chait, "Hydrogen/Deuterium Exchange Electrospray Ionization Mass Spectrometry: A Method for Probing Protein Conformational Changes in Solution," 115 *J. Am. Chem. Soc.* 6317-6321 (1993).

This technique was later extended to quality control studies involving recombinant protein drugs, chaperonian protein folding, ligand-binding studies, and screening combinatorial libraries of new proteins. *See,* R. Ramanathan et al., "Monitoring Recombinant Protein Drugs: A Study of Insulin by H/D Exchange and Electrospray Ionization Mass Spectrometry," 69 *Anal. Chem.* 5142-5145 (1997); C. V. Robinson et al., "Conformation of GroEL-bound α-Lactalbumin Probed by Mass Spectrometry," 372 *Nature* 646-651 (1994); D. S. Wagner and R. J. Anderegg, "Conformation of Cytochrome c Studied by Deuterium Exchange-Electrospray Ionization Mass Spectrometry," 66 *Anal. Chem.* 706-710 (1994); and D. M. Rosenbaum et al. "Screening Combinatorial Libraries of de Novo Proteins by Hydrogen-Deuterium Exchange and Electrospray Mass Spectrometry," 121 *J. Am. Chem. Soc.* 9509-9513 (1999). In addition, H/D exchange methods have also been expanded to study conformational differences of multiply protonated gas-phase proteins. B. E. Winger et al., "Probing Qualitative Conformation Differences of Multiply Protonated Gas-Phase Proteins via H/D Isotopic Exchange with D₂O," 114 *J. Am. Chem. Soc.* 5897-5898 (1992).

These methods reported for ESI/MS, however, are unsuitable for use in the pharmaceutical industry because the drug discovery process typically requires rapid and sensitive on-line methods for identification of the metabolites. Recent attempts to remedy this deficiency have met with limited success. For example, researchers have used ND₃ as a nebulizer or curtain gas and showed the feasibility of H/D exchange for structure elucidation of ESI formed ions. M. E. Hemling et al., "Gas Phase Hydrogen/Deuterium Exchange in Electrospray Ionization Mass Spectrometry as a Practical Tool for Structure Elucidation," 5 *J. Am. Soc. Mass Spectrom.* 434-442 (1994). However, the study was limited to infusion of a purified sample into a mass spectrometer. Furthermore, the usefulness of this method for obtaining tandem mass spectrometry information was not demonstrated. Other studies had similar drawbacks. *See, e.g., K.* E. Karlsson, "Deuterium Oxide as a Reagent for the Modification of Mass Spectra in Electrospray Microcolumn Liquid Chromatography―Mass Spectroscopy," 647 *J. Chrom.* 31-38 (1993).

Recently, researchers have used deuterium oxide as the LC mobile phase to permit on-line H/D exchange experiments to facilitate drug metabolite identification. *See* D. Q. Liu et al., "Use of On-Line Hydrogen/Deuterium Exchange to Facilitate Metabolite Identification," 15 *Rapid Commun. Mass Spectrom.* 1832-1839 (2001); and N. Ohashi et al., "Usefulness of the Hydrogen-Deuterium Exchange Method in the Study of Drug Metabolism Using Liquid Chromatography-Tandem Mass Spectrometry," 18 *J. Pharm. Biomed. Anal.* 325-334 (1998). This technique, however, required preparation of all the samples in D₂O and use of deuterated buffers and mobile phase, making the technique impractical for rapid metabolite identification. To date, a practical ESI-based on-line H/D exchange or similar method for characterizing drug metabolites remains unknown.

### SUMMARY OF THE INVENTION

The present invention provides an on-line method for characterizing analytes, such as drug metabolites, using high-pressure liquid chromatography-mass spectroscopy (LC-MS) or LC-MS/MS to detect hydrogen/deuterium exchange. The present invention provides numerous advantages that make it particularly useful for drug discovery. For example, the technique can be carried out completely on-line ― unlike previous techniques, the claimed method does not require time-consuming and labor-intensive sample preparation involving deuterated solvents. Instead, a discrete sample, from in vitro or in vivo studies, is introduced in the HPLC portion of the LC-MS or the LC-MS/MS, and the resulting mass spectra is generated, which can be used to determine whether hydrogen/deuterium exchange has occurred. In addition, the claimed method does not require the use of an HPLC having a deuterated mobile phase. This helps minimize the use of deuterated solvents.

Thus, one aspect of the present invention provides a method for performing hydrogen/deuterium exchange. The method includes introducing a discrete sample in a liquid chromatograph-mass spectrometer having an electrospray ionization source. The discrete sample includes a compound that will undergo hydrogen/deuterium exchange (i.e., the compound has an exchangeable hydrogen). The method also includes supplying the electrospray ionization source with a sheath liquid. The sheath liquid comprises a deuterated solvent so that when the sheath liquid contacts the compound in the electrospray ionization source, the compound undergoes hydrogen/deuterium exchange.

Another aspect of the present invention provides a method for characterizing a compound by hydrogen/deuterium exchange. The method includes introducing a discrete sample into a column of a liquid chromatograph, the discrete sample containing at least one compound that will undergo hydrogen/deuterium exchange. The method also includes eluting the compound from the liquid chromatograph into an electrospray ionization source of a mass spectrometer, and supplying the electrospray ionization source with a sheath liquid. The sheath liquid comprises a deuterated solvent so that when the sheath liquid contacts the compound in the electrospray ionization source, the compound undergoes hydrogen/deuterium exchange.

### BRIEF DESCRIPTION OF THE DRAWINGS

The various features, advantages and other uses of the present invention will become more apparent by referring to the following description and drawings in which:

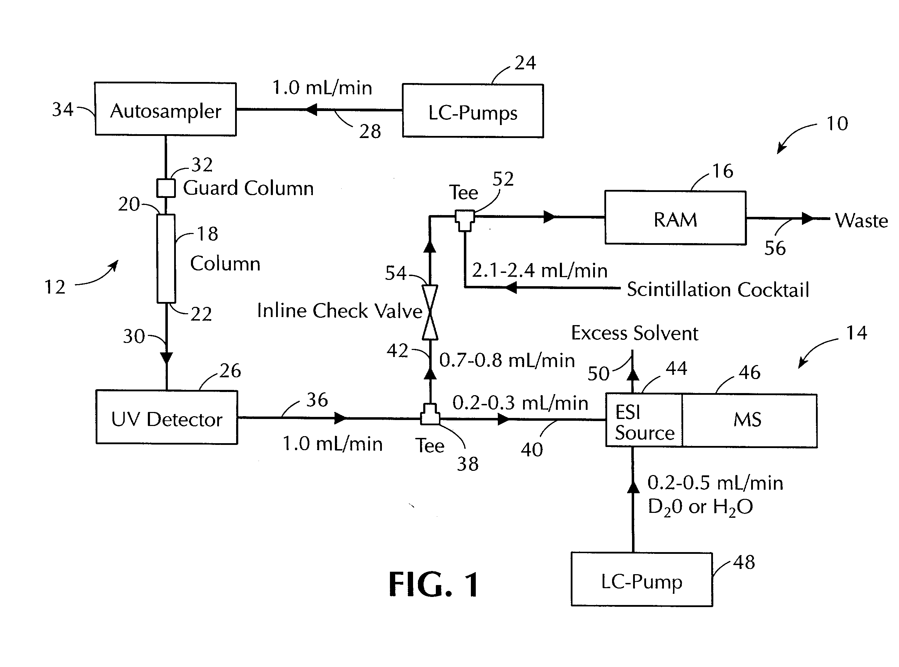

FIG. 1 is a schematic view of an on-line system for carrying out H/D exchange;

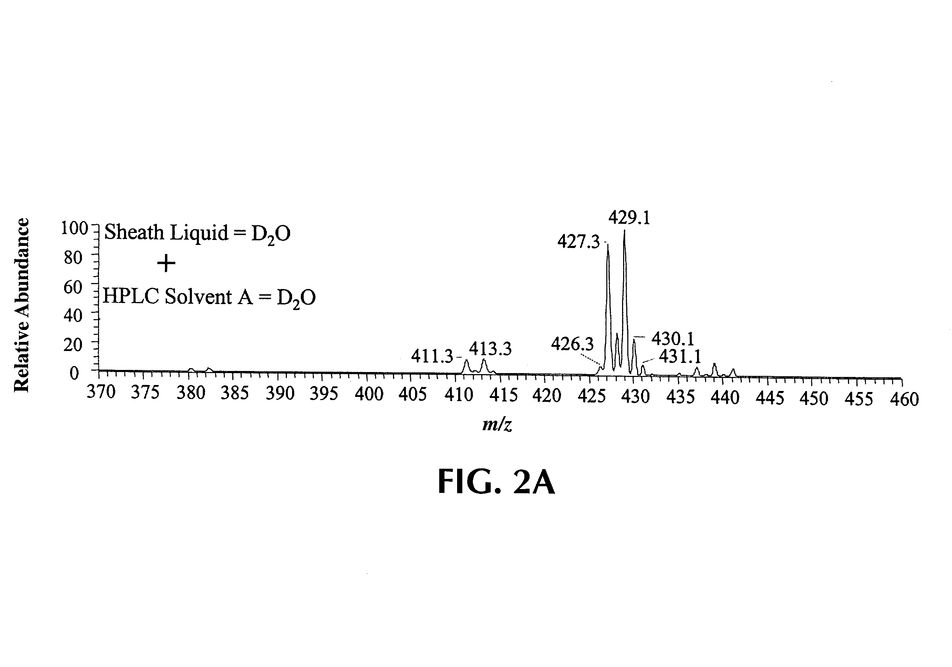

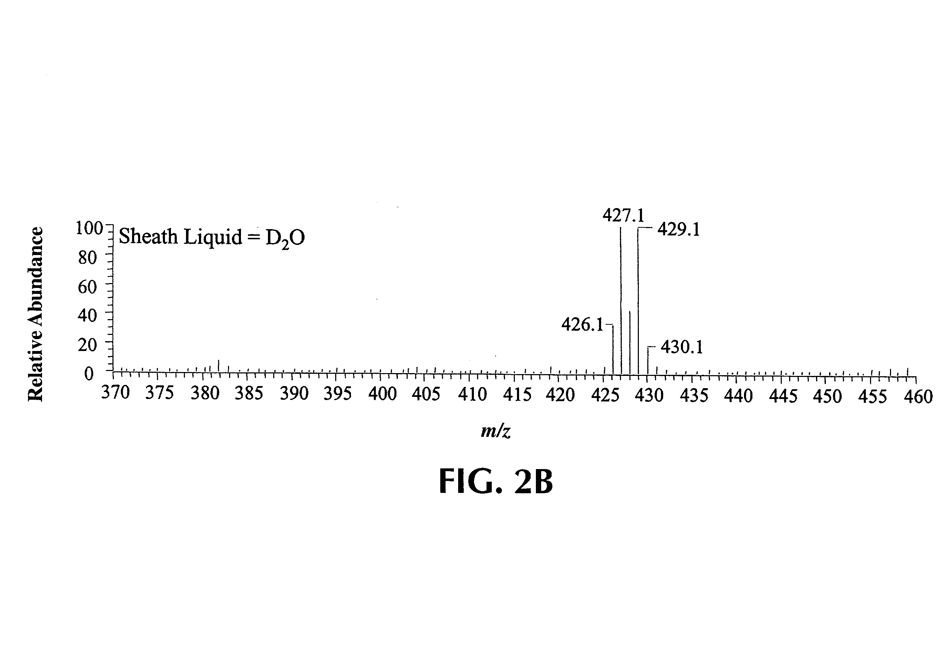

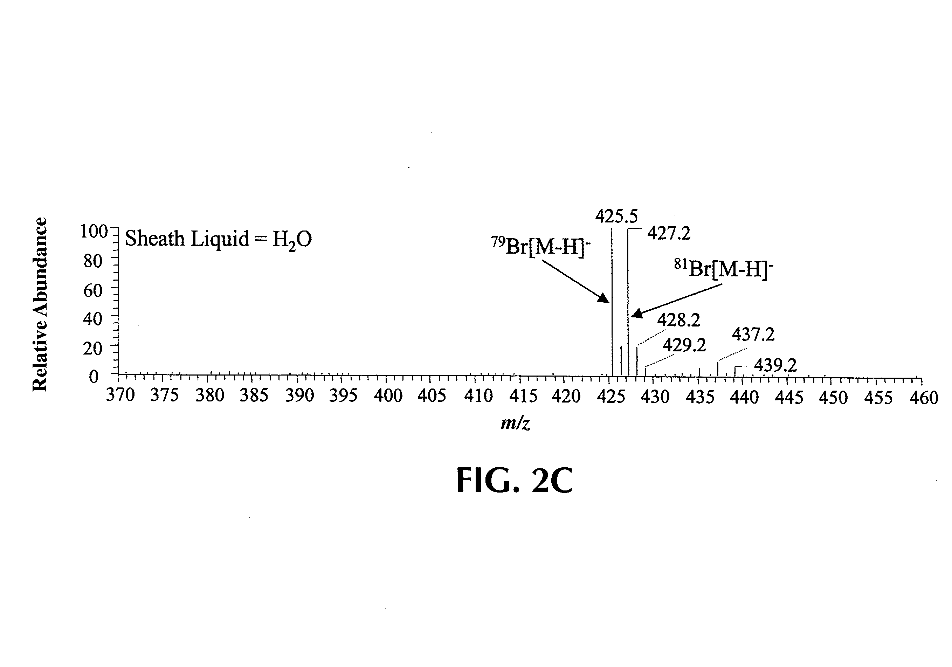

FIG. 2 shows mass spectra of PD 0200126 that were obtained from an LC-MS employing an ESI source and utilizing (a) off-line H/D exchange, HPLC separation using a deuterated mobile phase, and ESI employing a D₂O sheath liquid, (b) on-line H/D exchange using a D₂O sheath liquid and an aqueous mobile phase, and (c) an aqueous mobile phase and an H₂O sheath liquid;

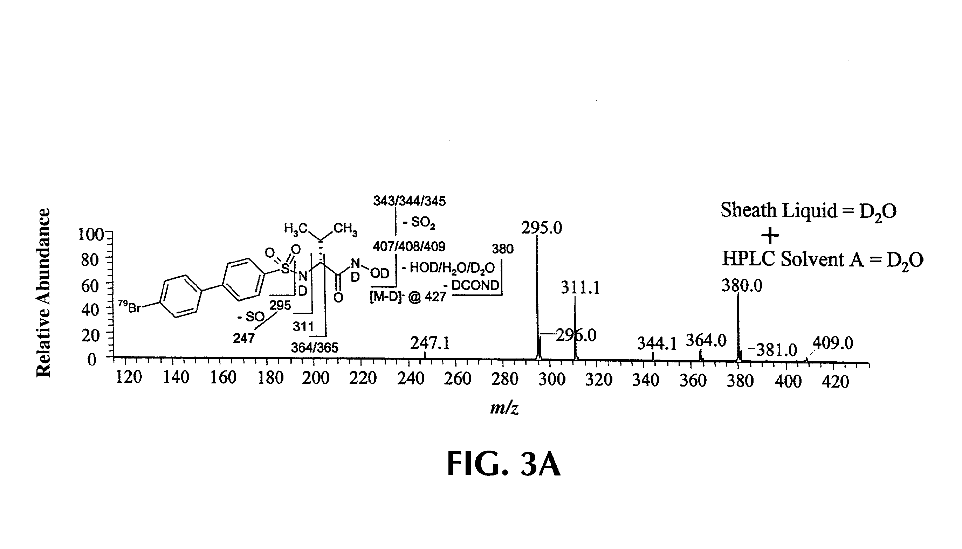

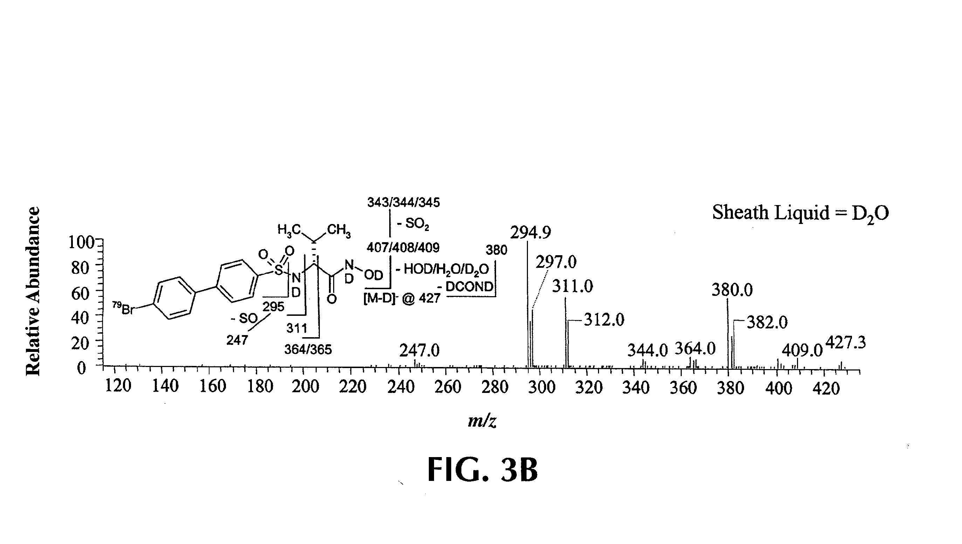

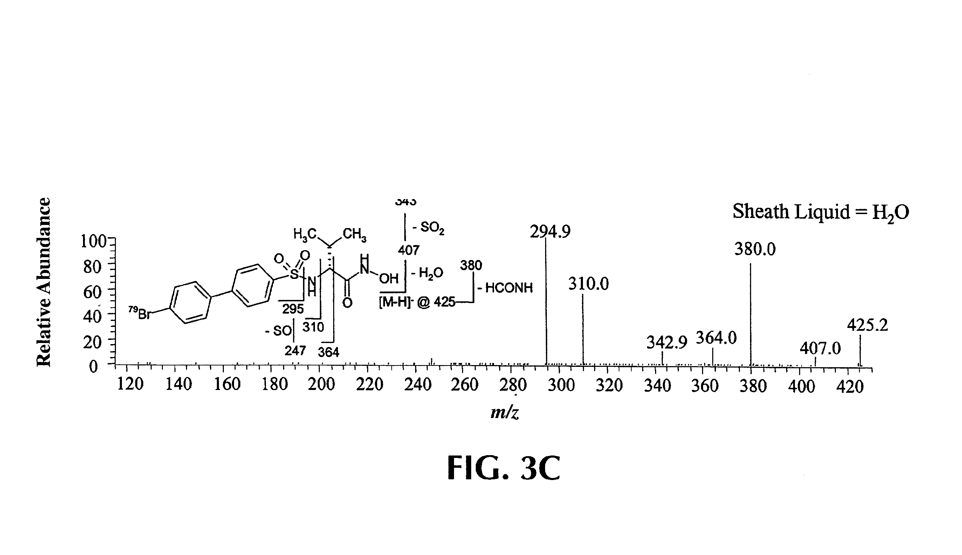

FIG. 3 shows mass spectra of PD 0200126 that were obtained from an LC-MS/MS employing an ESI source (MS isolation of deprotonated molecules that contained ⁷⁹Br) and using (a) off-line H/D exchange, HPLC separation using a deuterated mobile phase, and ESI employing a D₂O sheath liquid, (b) on-line H/D exchange using a D₂O sheath liquid and an aqueous mobile phase, and (c) an aqueous mobile phase and an H₂O sheath liquid;

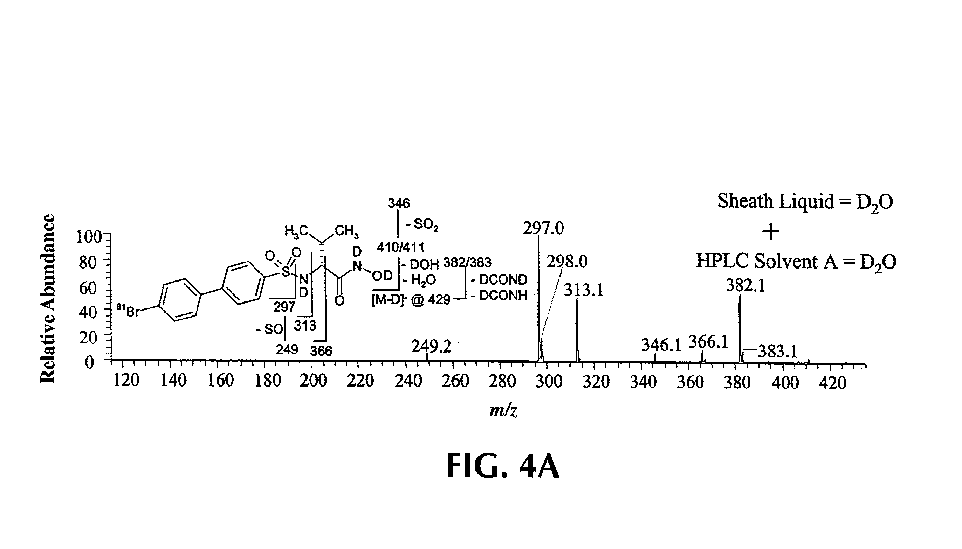

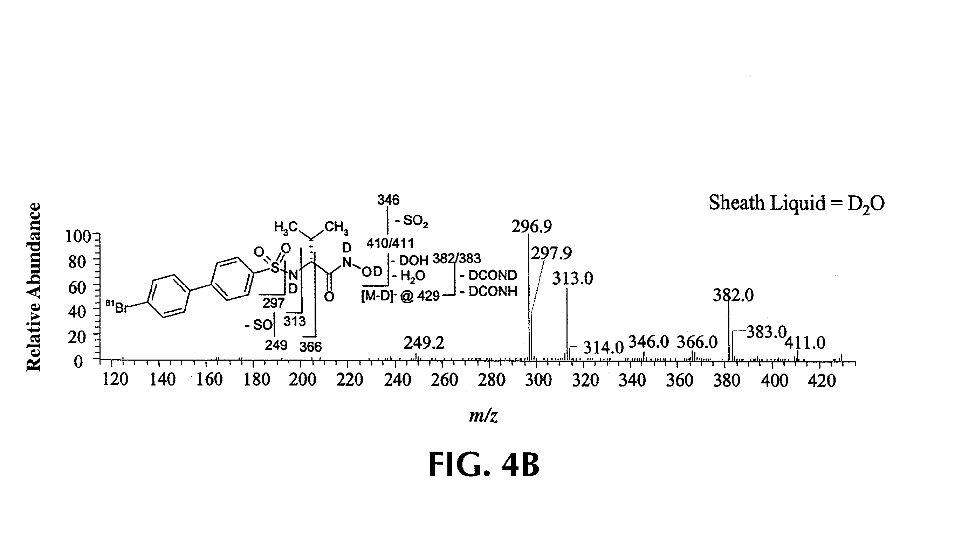

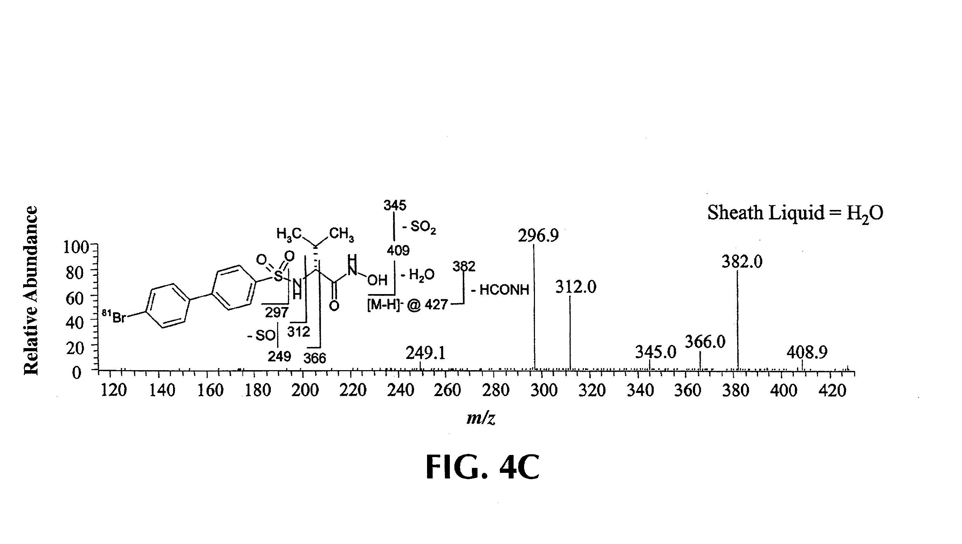

FIG. 4 shows mass spectra of PD 0200126 that were obtained from an LC-MS/MS employing an ESI source (MS isolation of deprotonated molecules that contained ⁸¹Br) and using (a) off-line H/D exchange, HPLC separation using a deuterated mobile phase, and ESI employing a D₂O sheath liquid, (b) on-line H/D exchange using a D₂O sheath liquid and an aqueous mobile phase, and (c) an aqueous mobile phase and an H₂O sheath liquid;

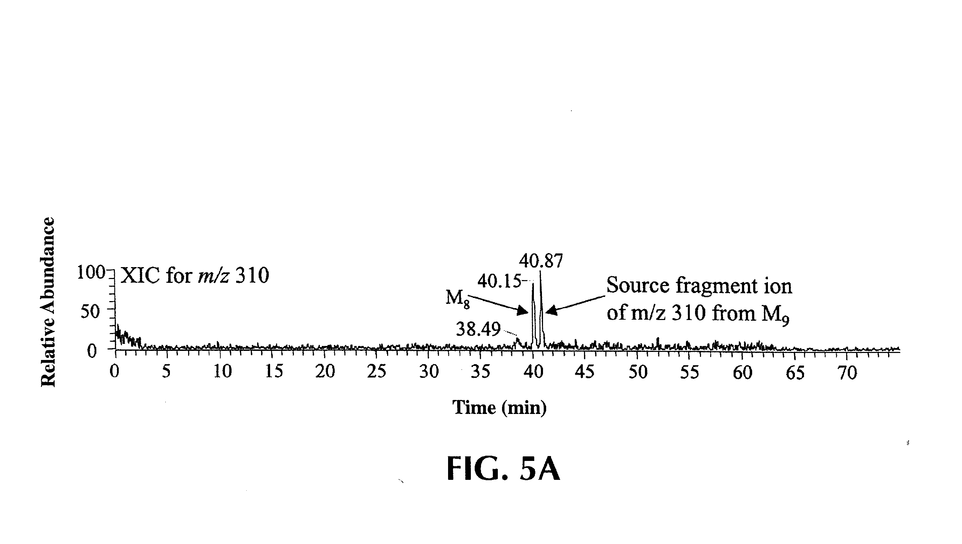

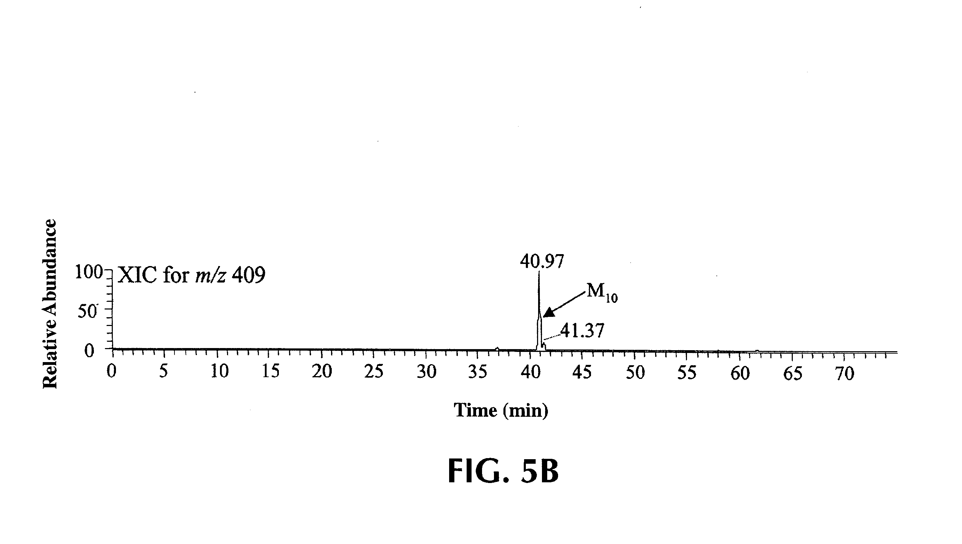

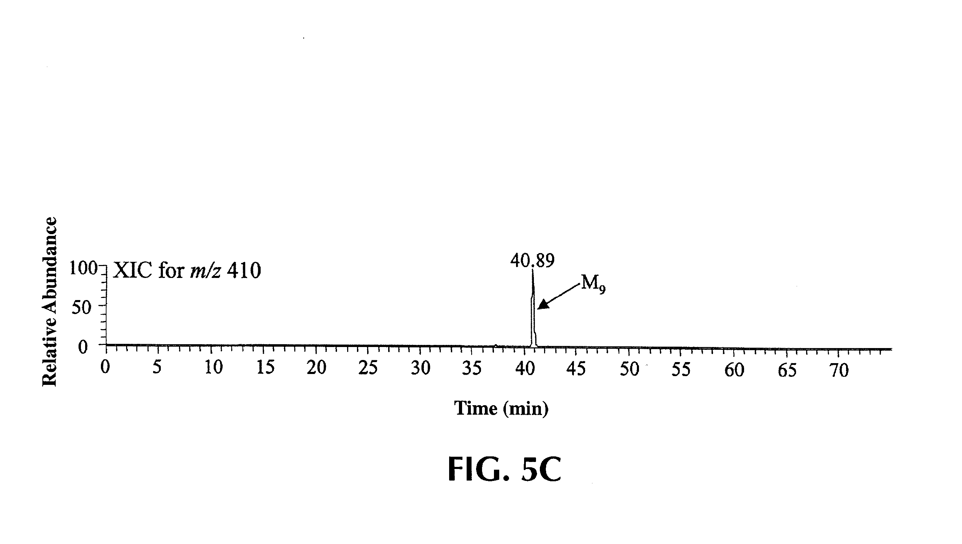

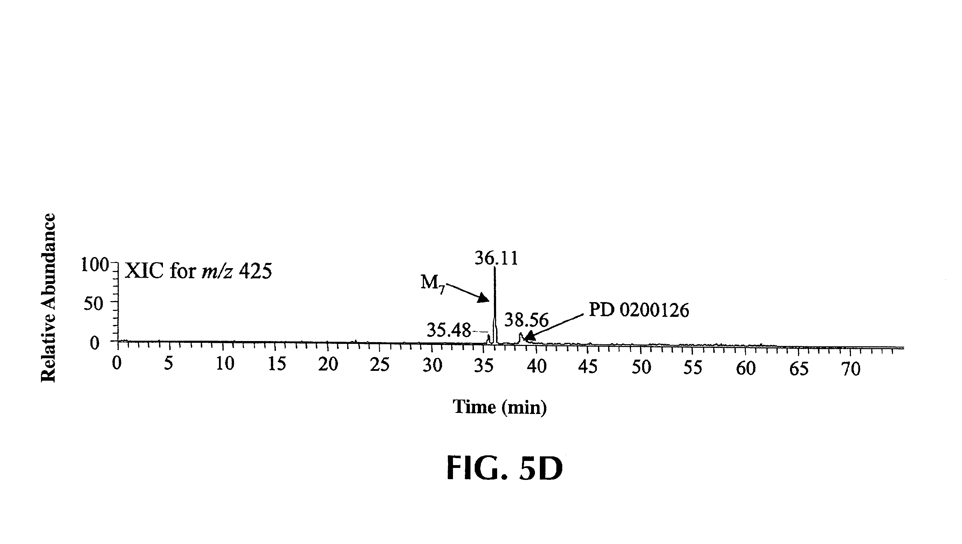

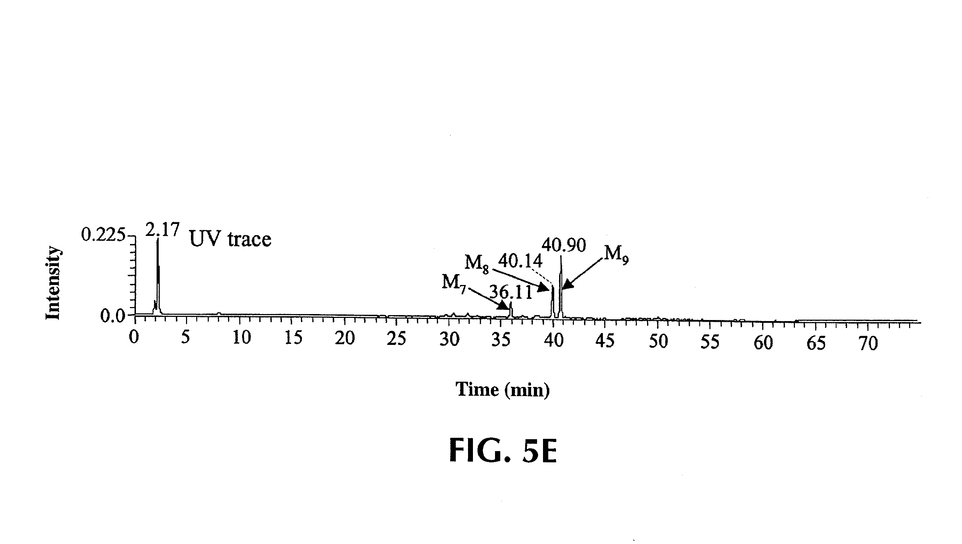

FIG. 5 shows extracted ion chromatograms for (a) M₈, (b) M₁₀, (c) M₉, and (d) PD 0200126 and M₇, as well as the (e) UV spectrum, which were obtained from plasma following oral administration of 300 mg/kg of PD 0200126 to rabbits;

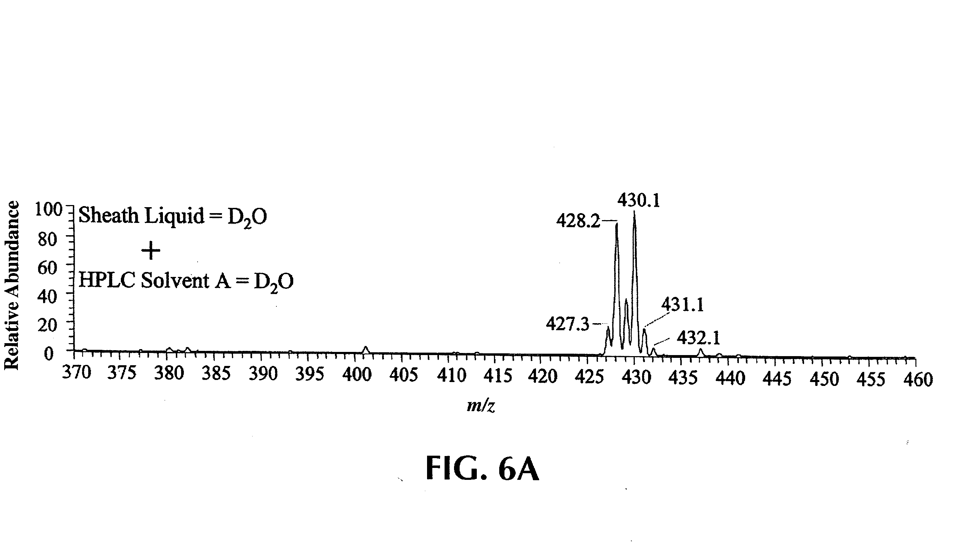

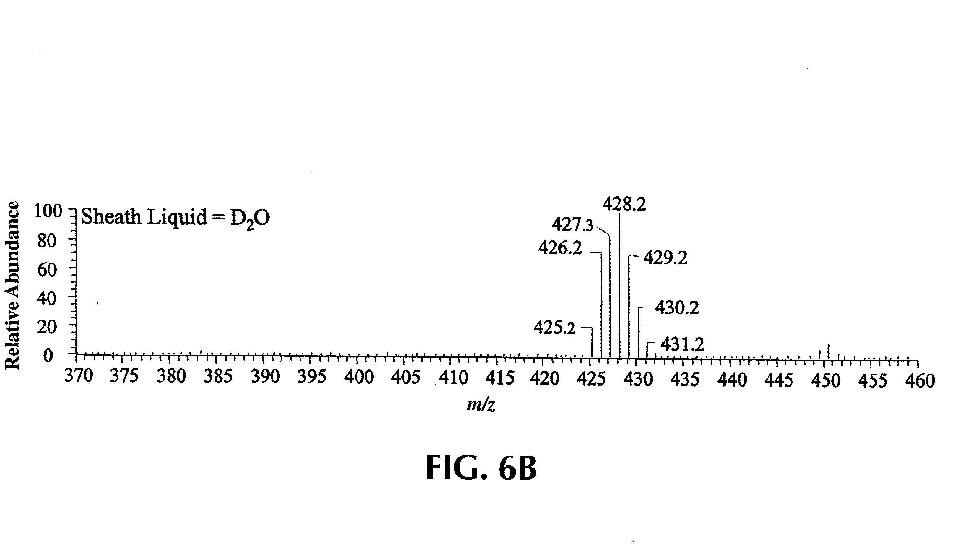

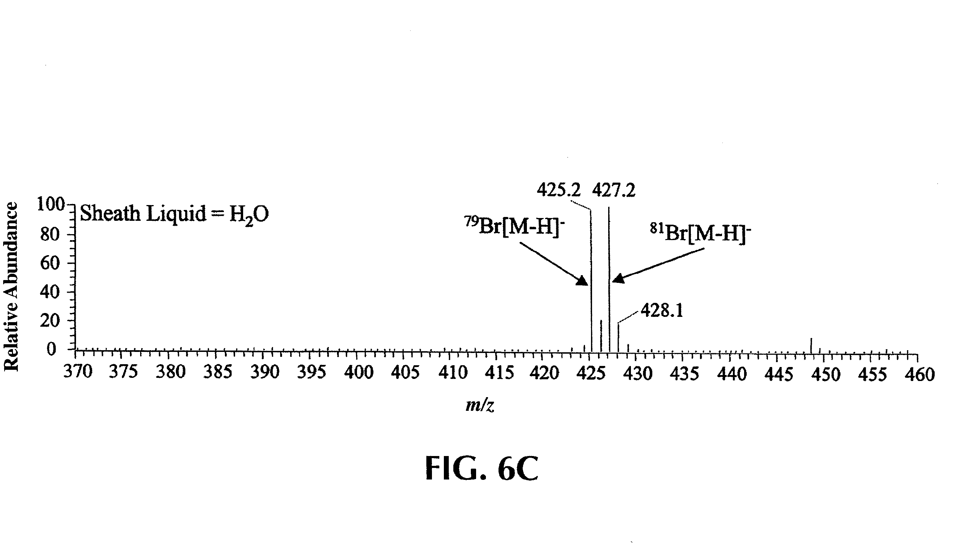

FIG. 6 shows mass spectra of spectra of M₇ metabolite that were obtained from an LC-MS employing an ESI source and utilizing (a) off-line H/D exchange, HPLC separation using a deuterated mobile phase, and ESI employing a D₂O sheath liquid, (b) on-line H/D exchange using a D₂O sheath liquid and an aqueous mobile phase, and (c) an aqueous mobile phase and an H₂O sheath liquid;

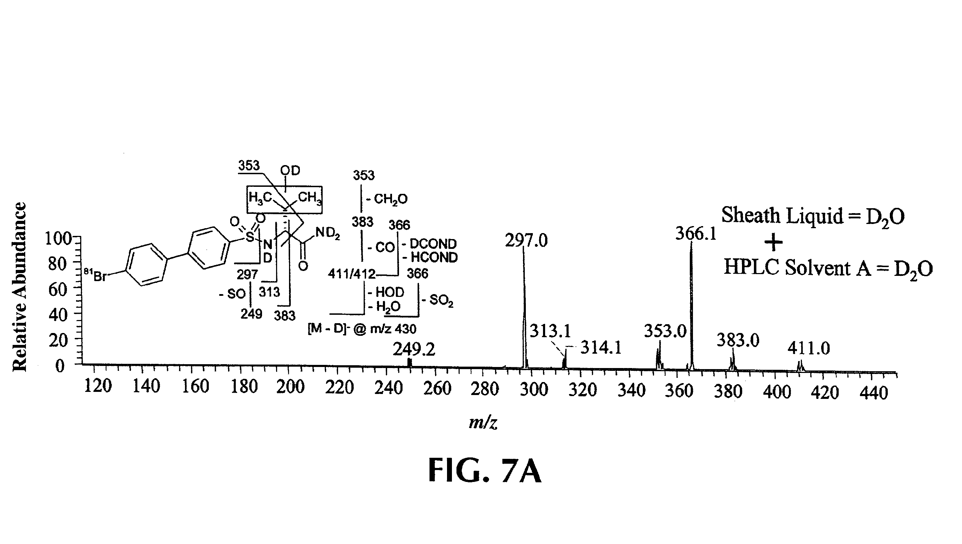

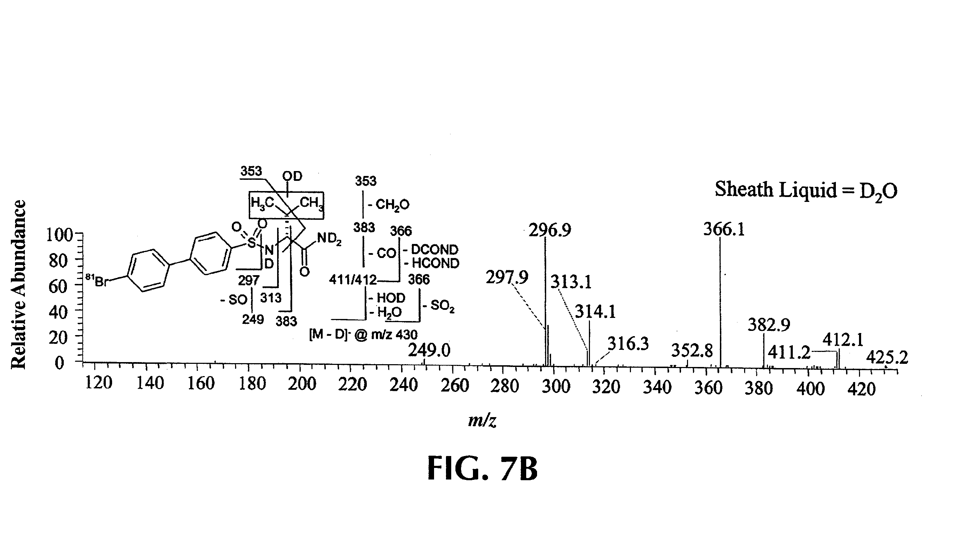

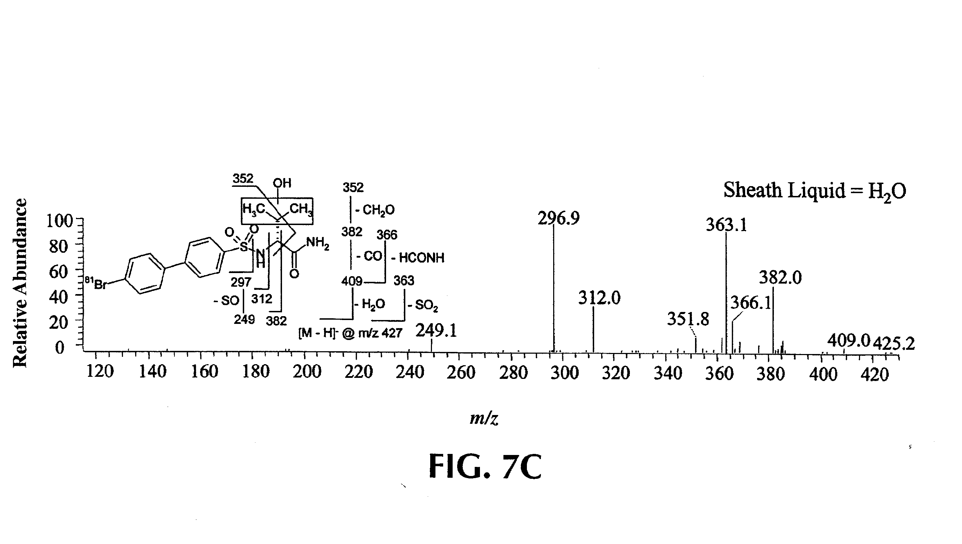

FIG. 7 shows mass spectra of metabolite M₇ that were obtained from an LC-MS/MS employing an ESI source (MS isolation of deprotonated molecules that contained ⁸¹Br) and using (a) off-line H/D exchange, HPLC separation using a deuterated mobile phase, and ESI employing a D₂O sheath liquid, (b) on-line H/D exchange using a D₂O sheath liquid and an aqueous mobile phase, and (c) an aqueous mobile phase and an H₂O sheath liquid;

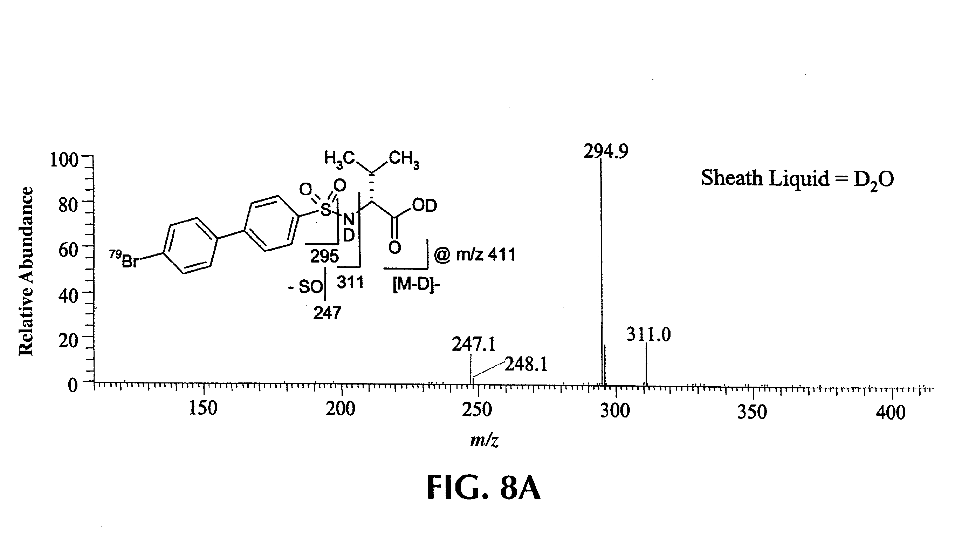

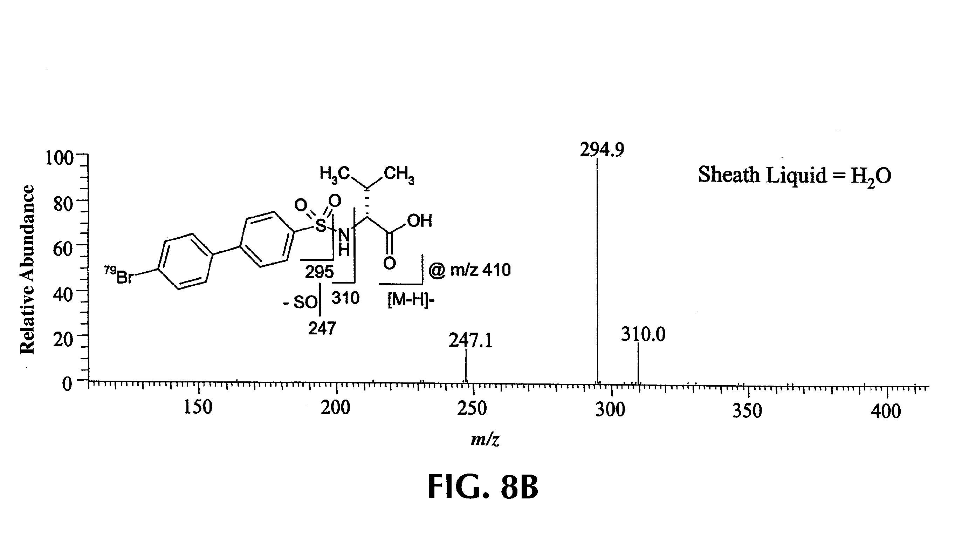

FIG. 8 shows mass spectra of metabolite M₉ that were obtained from an LC-MS/MS employing an ESI source (MS isolation of deprotonated molecules that contained ⁷⁹Br) and using (a) on-line H/D exchange using a D₂O sheath liquid and an aqueous mobile phase, and (b) an aqueous mobile phase and an H₂O sheath liquid; and

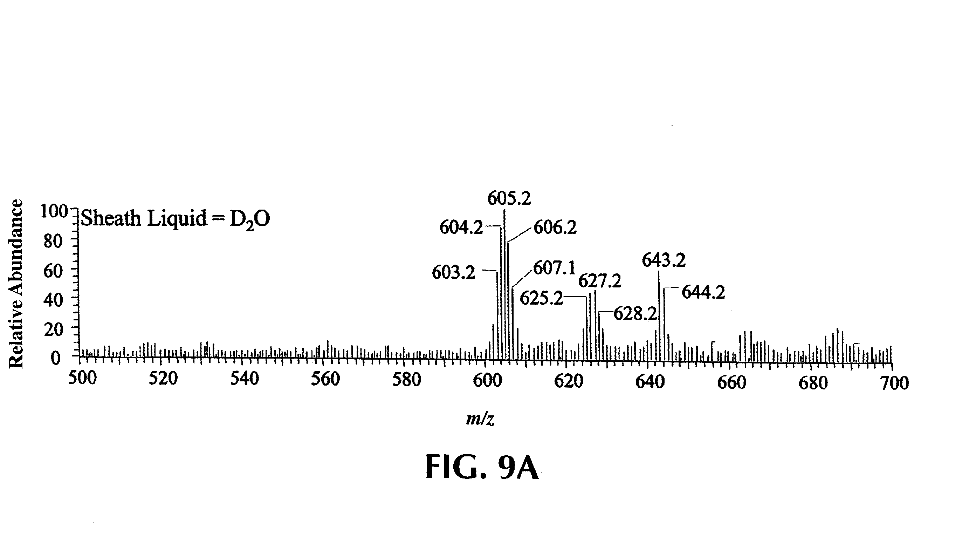

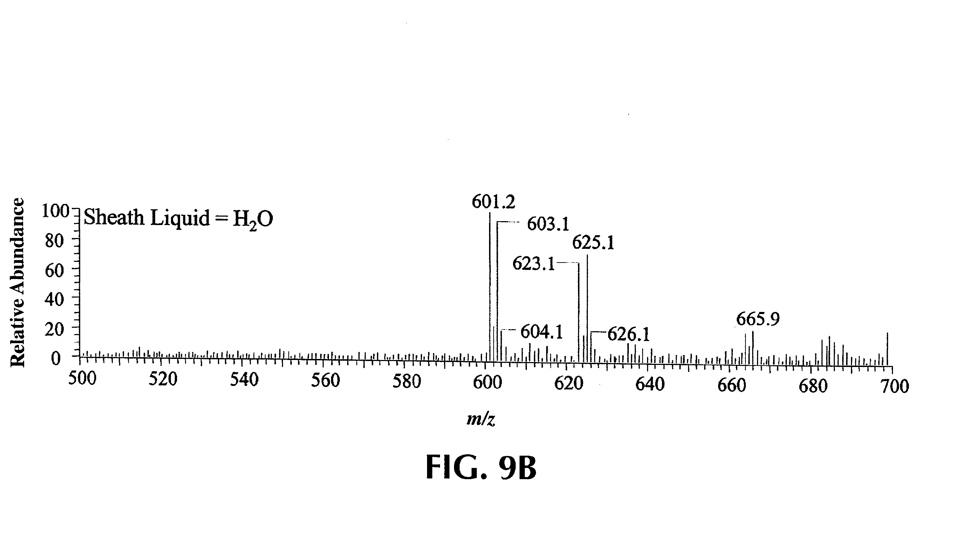

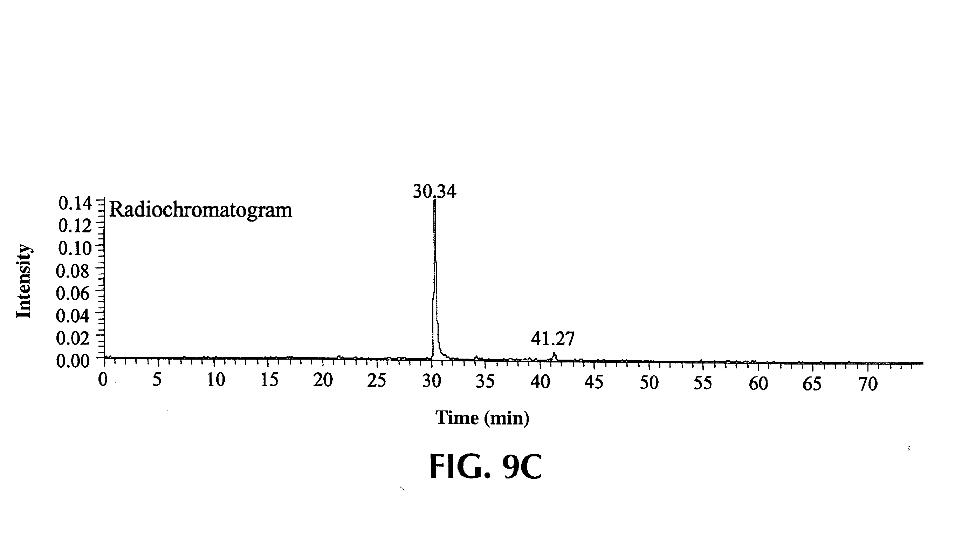

FIG. 9 shows mass spectra of metabolite M₂ that were obtained from an LC-MS employing an ESI source and utilizing (a) on-line H/D exchange using a D₂O sheath liquid and an aqueous mobile phase, and (b) an aqueous mobile phase and an H₂O sheath liquid, and also shows (c) a corresponding radiochromatogram.

### DETAILED DESCRIPTION

FIG. 1 shows a schematic view of an on-line system 10 for rapidly characterizing drug metabolites using hydrogen/deuterium (H/D) exchange. As shown in FIG. 1, the system 10 includes a high-pressure liquid chromatograph 12 (HPLC), a mass spectrometer 14 (MS), and an optional flow-through radioactivity detector 16. The HPLC 12 portion of the system 10, which separates components (i.e., metabolites) of a given sample, includes a separation column 18 having an inlet 20 and an outlet 22. The inlet 20 and the outlet 22 communicate, respectively, with one or more pumps 24 (e.g., reciprocating piston pumps, syringe pumps, constant pressure pumps, etc.) and with an optional analyte detector 26 through first 28 and second 30 conduits. The HPLC 12 includes a guard column 32, which is located adjacent to the inlet 20 of the separation column 18. The guard column 32 filters out any particles in the sample that may clog the separation column 18 or removes any compounds in the sample that may interfere with the separation of the metabolites.

The HPLC 12 shown in FIG. 1 also includes an optional autosampler 34, which communicates with the columns 18, 32 and the pumps 24 via a sample loop (not shown). The autosampler 34 generally contains multiple samples stored, for example, in one or more standard multiwell plates or in separate vials. The autosampler typically includes one or more computer-controlled syringes or similar injection devices, which are mounted on a translation mechanism, such as a 3-D robotic arm. The autosampler 34 can thus be programmed to periodically inject different samples into the sample loop, and hence guard 32 and separation 18 columns. Other embodiments may utilize a manual injection valve and a sample loop, which communicates with the separation column inlet 20 via the first conduit 28.

During a system 10 run, the pumps 24 continually supply the separation column 18 with a carrier solvent (i.e., a mobile phase) which transports the sample from the autosampler 34 (or other sample injection device) into and through the guard 32 and separation 18 columns. Because each of the metabolites interacts differently with the mobile phase and the stationary phase (i.e., column packing), individual metabolites exit the separation column outlet 22 at different times. The mobile phase transports the separate metabolites from the column outlet 22, through the second conduit 30, and into the analyte detector 26, which senses the passage of a metabolite or drug substance by detecting changes in the characteristics of the mobile phase (e.g., ultraviolet or visible light absorption, changes in refractive index, etc.). Depending on the difficulty of separating the analytes, the composition of the mobile phase may be constant during the run (i.e., isocratic elution) or may change with time (e.g., gradient elution or mixed-mode elution). Additionally, the HPLC 12 may employ combinations of mobile and stationary phases that separate the metabolites based on many different principles, including differences in metabolite polarity, size, and specific affinity to a compound immobilized on the stationary phase.

In the embodiment shown in FIG. 1, the mobile phase and individual metabolites (eluent) exit the analyte detector 26 through a third conduit 36, which channels the eluent into a flow splitter valve or first tee 38. The first tee 38 directs the eluent into fourth 40 and fifth 42 conduits, which channel the eluent into the mass spectrometer 14 and the flow-through radioactivity detector 16, respectively. The first tee 38 allows one to vary the ratio of flow rates through the fourth 40 and the fifth 42 conduits, which like the flow rate of the mobile phase, generally remains unchanged during a system 10 run. The flow rate of the mobile phase may depend on many factors, including the size (internal diameter) and the nature (column packing) of the guard 32 and separation 18 columns, the ease of separating the metabolites, and so on, and may range from about 10⁻¹ mL/min to about 10¹ mL/min. Additionally, the ratio of the flow rates into the mass spectrometer 14 and the radioactivity detector 16 may range from about 0.1 to about 0.9. Thus, for a nominal mobile phase flow rate of about 1 mL/min, the flow rate of the eluent entering the MS 14 in different runs may fall within a range from about 0.1 mL/min to about 0.9 mL/min, though typically, the flow rate entering the MS 14 will fall in a range between about 0.2 mL/min and about 0.3 mL/min.

The mass spectrometer 14 shown in FIG. 1 includes a standard electrospray ionization (ESI) source 44, which is coupled to a conventional mass analyzer 46 (e.g. one or more quadrupoles, an ion trap, etc., and a detector). Though not shown in FIG. 1, the mass spectrometer 14 also includes a computerized data acquisition and processing system, which in addition to generating mass spectra, may also be used to record data from the HPLC analyte detector 26 and the radioactivity detector 16. Other embodiments may utilize separate systems for acquiring and processing data from the HPLC analyte detector 26 and the radioactivity detector 16.

Though ESI source designs may differ somewhat among vendors, they generally include a pair of coaxial cylindrical tubes, which are each maintained at a different electrical potential. To generate ions, the ESI source directs a liquid comprised of an analyte and solvent through the central tube or capillary (nozzle). The liquid breaks up into charged droplets as it emerges from the end of the nozzle because of the electrical potential that exists between the coaxial tubes. As the droplets travel outward from the end of the nozzle, they decrease in size due to evaporation of the solvent, which increases the charge density on the surface of each droplet. The increasing charge density eventually ruptures the droplet into smaller droplets, each having lower charge than the parent droplet. This process repeats itself until individual analyte ions are formed. In order to improve the performance of the electrospray ionization process, many ESI sources provide for introducing a sheath liquid in the annular region between the coaxial cylindrical tubes, which subsequently contacts the analyte and solvent downstream of the end of the nozzle.

Thus, during a system 10 run, a pump 48 continually supplies the ESI source 44 with a sheath liquid comprised of one or more deuterated solvents while the fourth conduit 40 routes the HPLC effluent into the nozzle of the ESI source 44. Although the deuterated solvent and the HPLC eluent from the HPLC 12 may contact each other for only a fraction of a second downstream of the end of the nozzle (e.g., for about 10⁻¹ s), surprisingly the metabolites and deuterated solvent undergo significant hydrogen/deuterium exchange. As shown in the Examples, this exchange can be seen in the resulting mass spectra of the metabolite (and drug), which may then be used to characterize the metabolite. The sheath liquid pump 48 may be of a type that is the same as or different than the HPLC pumps 24, and the ratio of the flow rates of the sheath liquid and the HPLC eluent entering the ESI source 44 is about unity or larger. Solvent from the HPLC mobile phase and sheath liquid exits the MS 14 via a sixth conduit 50 and is collected for appropriate disposal or recycling.

The sheath liquid may include any deuterated solvent that is compatible with the mass spectrometer and that will provide sufficient hydrogen/deuterium exchange. Such deuterated solvents may include, without limitation, D₂O, CD₃OD, and the like. Deuterium oxide appears to be particularly useful. Although the sheath liquid may include additional components to modify the properties of the HPLC eluent during metabolite characterization, it typically contains only deuterated solvent in order to maximize hydrogen/deuterium exchange.

As indicated above, the fifth conduit 42 routes a portion of the HPLC eluent into the optional radioactivity detector 16. Though any suitable radioactivity detector may be used, the embodiment shown in FIG. 1 employs a scintillation counter. Thus, the system 10 includes a second tee 52, which permits addition of a liquid scintillation agent or cocktail. When radioactive decay occurs, the scintillation agent produces light, which is detected by the scintillation counter. Since the scintillation cocktail is added downstream of the first tee 38, the fifth conduit 42 includes an inline check valve 54, which prevents backflow into the third 36 and fourth 40 conduits. Waste HPLC effluent and scintillation agent exits the radioactivity detector 16 through a seventh conduit 56. The ratio of the flow rates of the scintillation agent and the HPLC eluent entering the radioactivity detector 16 will depend on, among other things, the type of scintillation cocktail employed and the properties of the HPLC eluent. Generally the ratio ranges from about 2 to about 4, with a ratio of 3 being typical.

### EXAMPLES

To demonstrate the usefulness of the system 10 and methods described in this specification, the following examples examine hydrogen/deuterium exchange in metabolites of PD 0200126, which is a known matrix metalloprotease (MMP) inhibitor: 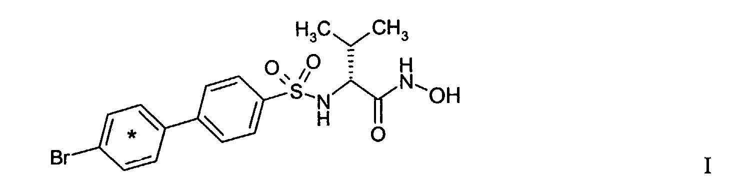 where in Formula I, "*" refers to the position of a radiolabel. Matrix metalloprotease inhibitors are a class of zinc containing enzymes that are responsible for the degradation of extracellular matrix components such as collagen. Although the role of MMPs is not completely understood, they have been implicated in a wide range of vascular diseases, including inflammation, smooth muscle cell migration, and the pathogenesis of vascular legions. *See, e.g.,* P. M. O'Brien et al., "Structure-Activity Relationships and Pharmacokinetic Analysis for a Series of Potent, Systemically Available Biphenylsulfonamide Matrix Metalloproteinase Inhibitors," 43 *J. Med. Chem.* 156-166 (2000).

As described below, mass spectra were obtained for PD 0200126 and its metabolites using an LC-MS or an LC-MS/MS having an ESI source and an ion trap mass analyzer. In each of the examples, H₂O or D₂O was used as the sheath liquid, and the resulting mass spectra were compared to help identify the metabolites. It should be clear, however, that the usefulness of the disclosed on-line system 10 and method is not limited to the characterization of PD 0200126, other MMP inhibitors, or their metabolites. Instead, the disclosed system 10 and method may generally be used for rapid characterization of any drug or drug metabolite that is susceptible to hydrogen/deuterium exchange.

### EXPERIMENTAL

*PD 0200126.* A radiolabeled matrix metalloprotease inhibitor, 2-(4'-bromo-biphenyl-4-sulfonylamino)-N-hydroxy-3-methyl-butyramide ([¹⁴C]PD 0200126) and proposed metabolites M₈ (PD 0408208), M₉ (PD 0169469) and M₁₀ (PD 0307442) were synthesized at Pfizer Global Research & Development (Ann Arbor, MI) in accordance with the procedure discussed in O'Brien et al., and were confirmed by NMR, LC-MS and LC-MS/MS.

*In Vivo Studies.* To obtain plasma samples, blood from rabbits was collected at various time points following a 300 mg/kg oral administration of PD 0200126. Plasma was precipitated by addition of 3 volumes of acetonitrile to 1 volume of plasma and then centrifuged. The resulting supernatant was decanted off, dried, and subsequently reconstituted in the mobile phase solvent (described below) prior to injection in the HPLC. A 100-µL aliquot was injected for each experiment (run).

*In Vitro Study.* A proposed metabolite M₂ (PD 0200126-glucuronide) was formed following incubation of [¹⁴C]PD 0200126 with dog liver hepatocytes for 180 minutes.

*Reagents.* HPLC grade solvents were purchased from Mallinkrodt Baker, Inc. (Paris, KY). Water was purified using the Millipore Milli-Qₚₗᵤₛ water purification system (Bedford, MA). Ultima Flo M scintillation cocktail was purchased from Packard Instrument Co. (Meridan, CT). A 2.0 ng/µL stock solution of PD 0200126 was prepared in methanol, and 200 ng of each analyte standard was injected for analysis.

*Apparatus and Conditions.* An Agilent 1100 HPLC system (Agilent Technologies, Wilmington, DE), including pumps, autoinjector, and UV detector, was used to separate the metabolites. Separation of the metabolites was achieved using a Metasil AQ guard column (Metachem Technologies, Torrance, CA) and a 150 mm × 4.6 mm MetaChem Polaris C-18 reversed-phase HPLC column (Metachem Technologies). The mobile phase comprised 20-mM ammonium acetate in water adjusted to pH 4 with acetic acid (Solvent A) and acetonitrile (Solvent B), and was maintained at a constant flow rate (1 mL/min) throughout each run. Gradient elution of the metabolites was achieved using programmed stepwise changes of solvent A/B ratios of 95/5, 50/50, 25/75, 5/95, and 95/5 at 0, 40, 50, 60, and 75 min, respectively.

After passing through the UV detector (280 nm), the HPLC effluent was split so that 20 % - 30 % of the flow was introduced into the mass spectrometer via an ESI source supplied with the mass spectrometer, while 70 % - 80 % was diverted to the radioactivity detector (β-RAM, IN/US, Tampa, FL). The analog output from the UV detector, along with the MS signal, were recorded in real time by the data system provided with the mass spectrometer (Xcalibur V 1.2, ThermoFinnigan). A separate software program (Win-Flow V 1.5, IN/US, Tampa, FL) was used to control the β-RAM and to collect the analog output from the β-RAM. The β-RAM data was integrated to obtain semi-quantitative information about the metabolites and the unchanged drug. The delay in response between the radioactivity detector and the MS was 0.2 min - 0.4 min with the MS response being recorded first.

Sheath liquid, either H₂O or D₂O, was delivered at a constant flow rate of 0.2 mL/min or 0.4 mL/min by a PE Series 200 pump (Perkin Elmer, Norwalk, CT). LC-MS (scan range 100-1100 Da) and LC-MS/MS experiments were performed using an ion trap mass spectrometer (LCQ-Deca, Thermo Finnigan, San Jose, CA) equipped with an ESI source. During each run, the ESI was operated in negative ionization mode with a spray voltage of 4500 V, a capillary temperature of 300 °C, a sheath gas (N₂) flow rate of 80 % of full scale, and an auxiliary gas (N₂) flow rate of 20 % of full scale. For all LC-MS/MS runs performed using the ion trap mass spectrometer, helium was maintained at a constant pressure of 40 psig and was used as the damping gas as well as the collision gas. For all LC-MSⁿ experiments, the precursor isolation window was set at 1 amu, and the activation amplitude (%), activation Q and activation time (ms) were set at 35, 0.25 and 30, respectively. Generally, 10- 15scans were signal-averaged to obtain a final MS or MS/MS spectrum. mL/min.

Structures of all drug candidates and metabolites studied as well as the maximum number of exchangeable hydrogens associated with each of the chemical entities are listed in TABLE 1. Structure elucidation of these metabolites was achieved by full scan LC-MS and LC-MS/MS with and without hydrogen/deuterium exchange.

### TABLE 1. List of metabolites, corresponding number of exchangeable protons associated with each metabolite, deprotonated and dedeuterated ion cluster information

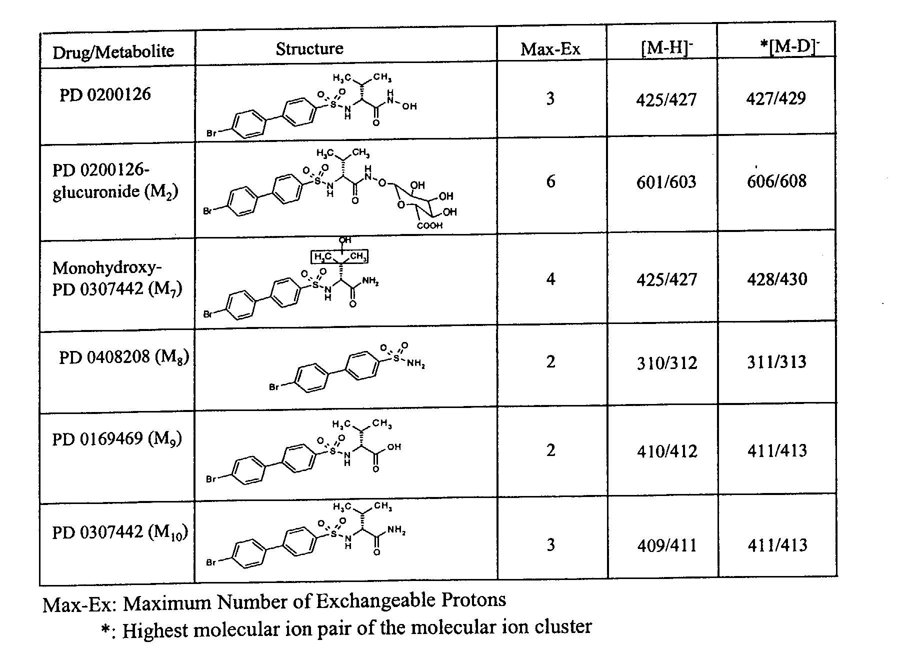

### EXAMPLE 1. STRUCTURE ELUCIDATION OF PD 0200126 USING LC-MS

FIG. 2 shows mass spectra of PD 0200126 utilizing (a) off-line H/D exchange, HPLC separation using a deuterated mobile phase, and ESI employing a D₂O sheath liquid, (b) on-line H/D exchange using a D₂O sheath liquid and an aqueous mobile phase, and (c) an aqueous mobile phase and an H₂O sheath liquid. Under the LC-MS conditions used (HPLC mobile phase flow rate of 1 mL/min, ESI sheath liquid flow rate of 0.2 mL/min), PD 0200126 eluted at 38.6 min and deprotonated molecules ([M-H]⁻) containing ⁷⁹Br and ⁸¹Br were detected at *m*/*z* 425 and 427, respectively (FIG. 2(c)). When D₂O was used as the sheath liquid (0.2 mL/min), the most abundant isotopic envelope was observed to shift by 2 Da to *m*/*z* 427 and 429 (FIG. 2(b)). The most intense peak in the mass spectrum, *m*/*z* 427, was associated with replacement of the maximum number of exchangeable protons (i.e., hydrogens on heteroatoms such as O, N and S) and associated removal of a deuterium for ionization. Although ions of *m*/*z* 427 and 429 are abundant among the isotopic cluster ions observed, detection of ions of *m*/*z* 426 and 428 indicates that the exchange has not been driven to completion.

Absence or presence of negligible amounts of ions of *m*/*z* 425 following H/D exchange (FIG. 2(b)) suggests that PD 0200126 is undergoing exchange to replace at least two of the three active hydrogens. As explained in a study of H/D exchange involving capillary electrophoresis-mass spectrometry, incomplete exchange can be associated with either the rate of the exchange or back-exchange. *See* M. E. Palmer et al., "Hydrogen/Deuterium Exchange Using a Coaxial Sheath-Flow Interface for Capillary Electrophoresis/Mass Spectrometry," 14 *Rapid Commun. Mass Spectrom.* 808-817 (2000). In other words, if the exchangeable hydrogens are not equally active, only the most active hydrogen will undergo the exchange, thus making the process rate limiting. On the other hand, back-exchange can also contribute to incomplete exchange due to the presence of H₂O in solvents or inadequate amounts of D₂O.

To explore these two factors associated with incomplete H/D exchange and to determine how they may influence structural elucidation, we undertook systematic evaluation of the sheath liquid H/D exchange process. We first evaluated the influence of sheath liquid flow rate on H/D exchange. Increasing the sheath liquid flow rate from 0.2 to 0.4 mL/min increased the theoretical atom % of deuterium in the ESI source from 62 % (= 0.2/(0.125 + 0.2)×100, where 0.125 is the estimated flow of aqueous buffer entering the source at ∼40 min and 0.2 is the D₂O sheath liquid flow rate) to 76 % (= 0.4/(0.125 + 0.4)). *See* J.A. McCloskey, "Introduction of Deuterium by Exchange for Measurement by Mass Spectrometry," 193 *Mass Spectrometry* 329-338. (J.A. McCloseky ed., 1990). However, increasing the atom % deuterium in the ESI source resulted in no significant change in the isotopic cluster pattern and suggests that, at least beyond some threshold level, the amount of D₂O delivered as sheath liquid has an insubstantial effect on the extent of H/D exchange.

To confirm the experimental % D incorporation and to compare with the theoretical values of 62 % - 76% and also to calculate the number exchangeable hydrogens, we used the step-by-step method described by McCloskey and coworkers. *See* McCloseky cited above and S. Verma et al., "Fast Atom Bombardment Mass Spectrometry following Hydrogen-Deuterium Exchange," 58 *Anal. Chem.* 2898-2902 (1986). The mass spectrum of PD 0200126 obtained before exchange (FIG. 2(c)) showed *m*/*z* 425, 426, 427, 428 and 429 peaks to have relative intensities of 39.3, 8.2, 41.1, 8.5 and 2.9 %, respectively. Following exchange within the ESI source, the isotopic cluster ions of *m*/*z* 425, 426, 427, 428, 429, 430 and 431 were detected with respective relative intensities of 1.1, 10.7, 33.3, 14.6, 32.8, 5.9 and 1.6 %. Calculations using the method described by McCloskey and coworkers showed that PD 0200126 underwent two exchanges and that the experimentally determined % D incorporation to be less than 50%. Although the calculations were complex due to the presence of multiisotopic elements, results showed that H/D exchange in the ESI source is most likely rate limited.

To further assess the effect of exchange rate and back-exchange, we incubated 200 µL of the PD 0200126 standard with 800 µL of D₂O for 24 h and used a deuterated mobile phase along with D₂O sheath liquid and repeated the LC-MS experiment. Isotopic cluster pattern (FIG. 2(a)) with less abundant ions of *m*/*z* 426 indicates that the exchange had been driven to near completion compared to previous experiment where the H/D exchange occurred only in ESI source. Additionally, this experiment confirmed that in-source sheath liquid H/D exchange is most likely rate limited and less efficient than off-line solvent exchange. However, compared to previously described on-line type H/D exchange methods, information about the exchangeable hydrogens of the metabolites can be made readily available. *Cƒ*., D. Q. Liu et al., "Use of On-Line Hydrogen/Deuterium Exchange to Facilitate Metabolite Identification," 15 *Rapid Commun. Mass Spectrom.* 1832-1839 (2001); and N. Ohashi et al., "Usefulness of the Hydrogen-Deuterium Exchange Method in the Study of Drug Metabolism Using Liquid Chromatography-Tandem Mass Spectrometry," 18 *J. Pharm. Biomed. Anal.* 325-334 (1998).

### EXAMPLE 2. STRUCTURE ELUCIDATION OF PD 0200126 USING LC-MS/MS WITH ISOLATION OF MOLECULES CONTAINING ⁷⁹Br

FIG. 3 shows mass spectra of PD 0200126 that were obtained from an LC-MS/MS (MS isolation of deprotonated molecules that contained ⁷⁹Br) using (a) off-line H/D exchange, HPLC separation using a deuterated mobile phase, and ESI employing a D₂O sheath liquid, (b) on-line H/D exchange using a D₂O sheath liquid and an aqueous mobile phase, and (c) an aqueous mobile phase and an H₂O sheath liquid. Initial experiments were performed using mobile phase (1 mL/min) comprised of 20-mM ammonium acetate in water adjusted to pH 4 with acetic acid (Solvent A) and acetonitrile (Solvent B) and a sheath liquid (0.2 mL/min) comprised of either H₂O or D₂O. This set of experiments allowed H/D exchange to occur only in the ESI source. FIG. 3(c) and FIG. 3(b) compare the product-ion-spectra obtained using H₂O and D₂O as sheath liquid, respectively.

Another set of experiments was performed using a mobile phase (1 mL/min) comprised of 20-mM ammonium acetate in D₂O adjusted to pH 4 with acetic acid (Solvent A) and acetonitrile (Solvent B), and using D₂O as the sheath liquid (0.2 mL/min). This set of experiments allowed H/D exchange to occur prior to injection in the guard and separation columns and increased the % D incorporation by the use of D₂O as the mobile phase (FIG. 3(a)). Comparison of FIG. 3(b) and FIG. 3(c) shows that H/D exchange was not been driven to completion in the ESI source. Absence of the fragment ions of *m*/*z* 249, 297, 312 and 382 in the MS/MS spectrum obtained following off-line H/D exchange (FIG. 3(a)) indicates that H/D exchange has been driven to completion, and that, under the experimental conditions used, % D available was greater than the 62 % - 76 % deuterium available when exchange occurred only in the ESI source. In addition, back-exchange was limited or absent in the off-line solvent exchange method. However, the off-line method is labor intensive and not practical when rapid information is required for early identification of the metabolites.

Presence of fragment ions of *m*/*z* 249, 297, 312 and 382 indicates that some of the precursor ions of *m*/*z* 427 that were isolated for MS/MS are from ⁸¹Br-PD 0200126 and the presence of abundant ions of *m*/*z* 247, 295, 311 and 380 indicates that most of the *m*/*z* 427 ion that was selected for MS/MS is from ⁷⁹Br-PD 0200126, which had undergone 3 deuterium exchanges (net gain of 2 due to removal of an exchangeable proton for ionization). The shift of the fragment ion of *m*/*z* 310 (FIG. 3(c)) to *m*/*z* 311 (FIG. 3(b) and FIG. 3 (a)) shows that the amide nitrogen on the bromo-biphenyl-sulfonamide moiety is intact.

### EXAMPLE 3. STRUCTURE ELUCIDATION OF PD 0200126 USING LC-MS/MS WITH ISOLATION OF MOLECULES CONTAINING ⁸¹Br

FIG. 4 shows mass spectra of PD 0200126 that were obtained from an LC-MS/MS (MS isolation of deprotonated molecules that contained ⁸¹Br) using (a) off-line H/D exchange, HPLC separation using a deuterated mobile phase, and ESI employing a D₂O sheath liquid, (b) on-line H/D exchange using a D₂O sheath liquid and an aqueous mobile phase, and (c) an aqueous mobile phase and an H₂O sheath liquid. These data were obtained to further confirm the fragmentation assignment and to examine if the lower H/D exchange efficiency associated with exchanges occurring in the ESI source could cause difficulties with product ion interpretation.

In these experiments, deprotonated molecules that contained ⁸¹Br and had undergone 3 exchanges (less one exchangeable proton due to ionization) were selected and subjected to tandem mass spectrometry. Upon collision induced dissociation (CID), the precursor ion of *m*/*z* 429 formed fragment ions of 249, 297 and 312. Unlike the product ion spectrum of ⁷⁹Br-PD 0200126 from H/D exchange occurring in the ESI source, the product ion spectrum of ⁸¹Br-PD 0200126 from ESI source exchange was less complex (*Cf.* FIG. 3(a) and FIG. 4(b)) and closely matched the product ion spectrum obtained following off-line solution phase H/D exchange (FIG. 4(a)). A 2 Da mass shift of the fragment ions following the H/D exchange confirmed the fragmentation assignment (FIG. 3(a), (b) and FIG. 4(a), (b)).

### EXAMPLE 4. PD 0200126, M₇, M₈, M₉ and M₁₀ FROM RABBIT PLASMA

These data were obtained to evaluate the sensitivity and demonstrate the validity of using the disclosed approach to characterize metabolites during the early stages of drug discovery. Structure elucidation of these metabolites was achieved using LC-MS and LC-MS/MS in which D₂O and H₂O were used in the sheath liquid and in the mobile phase, respectively, and for comparison purposes, either D₂O or H₂O were used in both the sheath liquid and in the mobile phase.

FIG. 5 shows extracted ion chromatograms for (a) M₈, (b) M₁₀, (c) M₉, and (d) PD 0200126 and M₇, as well as the (e) UV spectrum, which were obtained from plasma following oral administration of 300 mg/kg of PD 0200126 to rabbits. As indicated in FIG. 5, rabbit plasma exhibited 3 prominent UV components associated with metabolites M₇, M₈ and M₉, respectively at *m*/*z* 425, 310 and 410. Trace amounts of PD 0200126 and M₁₀ were also observed at *m*/*z* 425 and 409, respectively. Metabolites M₁-M₆ were characterized in a separate study involving rat and mouse hepatocytes.

EXAMPLE 5 - EXAMPLE 8, below, discuss structure elucidation of metabolites M₇, M₈, M₉ and M₁₀ using data obtained, at least in part, from hydrogen/deuterium exchange experiments on rabbit plasma samples described in EXAMPLE 4.

### EXAMPLE 5. STRUCTURE ELUCIDATION OF METABOLITE M₇

As shown in FIG. 5(e), metabolite M₇ has a similar nominal mass as the parent drug, PD 0200126, and eluted at 36.1 min. The odd value of *m*/*z* for the metabolite M₇ ion indicates that M₇ bears an even number of nitrogen atoms.

FIG. 6 shows mass spectra of spectra of M₇ metabolite that were obtained from an LC-MS utilizing (a) off-line H/D exchange, HPLC separation using a deuterated mobile phase, and ESI employing a D₂O sheath liquid, (b) on-line H/D exchange using a D₂O sheath liquid and an aqueous mobile phase, and (c) an aqueous mobile phase and an H₂O sheath liquid. As indicated in FIG. 6(c), M₇ showed similar isotopic cluster pattern as the parent molecule when using H₂O as the sheath liquid. However, when subjected to H/D exchange, the isotopic cluster pattern of M₇ was different from that of the parent drug. As shown in FIG. 2, when PD 0200126 was subjected to H/D exchange, the most abundant isotopic cluster ion shifted by 2 Da whereas with M₇ a 3 Da shift was observed (*Cf.* FIG 6(c) and FIG. 6(b)). For metabolite M₇, a 3 Da increase is in agreement with the presence of 4 exchangeable hydrogens in the proposed monohydroxy-PD 0200126-amide or monohydroxy-PD 0307442 structure (TABLE 1).

FIG. 7 shows mass spectra of metabolite M₇ that were obtained from an LC-MS/MS (MS isolation of deprotonated molecules that contained ⁸¹Br) using (a) off-line H/D exchange, HPLC separation using a deuterated mobile phase, and ESI employing a D₂O sheath liquid, (b) on-line H/D exchange using a D₂O sheath liquid and an aqueous mobile phase, and (c) an aqueous mobile phase and an H₂O sheath liquid. Under the LC-MS/MS conditions used (HPLC mobile phase flow rate of 1 mL/min, liquid sheath flow rate of 0.2 mL/min), M₇ showed a similar fragmentation pattern as the parent except with different relative abundance (*Cf.* FIG. 7(c) and FIG. 4(c)). The major fragment ion at *m*/*z* 297 suggests that the bromo-biphenyl-4-sulfonyl moiety is intact. Fragment ion at *m*/*z* 312 suggests that the bromo-biphenyl-4-sulfonylamino moiety is also intact and modification, possibly hydroxylation, is taking place on the 3-methyl-butyramide moiety.

Unlike the parent molecule, metabolite M₇ underwent fragmentation to give abundant fragment ions corresponding to [M-H-SO₂]⁻ at *m*/*z* 363. A similar fragmentation behavior was observed with metabolite M₁₀ (PD 0307442) and PD 0200126-amide (MS/MS spectrum not provided). This suggests that M₇ is possibly a monohydroxylated derivative of PD 0200126-amide. In addition to showing the fragment ions present in the MS/MS spectrum of the parent (FIG. 7(c)), M₇ also exhibited trace amounts of fragment ion corresponding to [M-H-H₂O]⁻ at *m*/*z* 409. This fragment ion further supports the structural assignment provided for metabolite M₇ in TABLE 1.

Additionally, the post H/D exchange MS/MS spectrum of the precursor ions of *m*/*z* 430 clearly supports the proposed structure for metabolite M₇ (FIG. 7(a) and FIG. 7(b)). As shown in the fragmentation scheme, the major fragment ion at *m*/*z* 297 suggests that the bromo-biphenyl-4-sulfonyl moiety is intact. Fragment ions at *m*/*z* 313/314 suggest that the bromo-biphenyl-4-sulfonylamino moiety is intact and confirms the presence of an exchangeable hydrogen. As expected, the fragment ion at *m*/*z* 363 corresponding to [M-H-SO₂]⁻ shifted by 3 Da to *m*/*z* 366. Both the H/D exchange information and the product-ion-spectra suggest that M₇ is a metabolite in which an isopropyl moiety of PD 0307442 is modified by hydroxylation. As shown in the fragmentation scheme of FIG. 7, the presence of fragment ion at *m*/*z* 352 and the associated deuterium exchanged fragment ion at *m*/*z* 353 suggest that hydroxylation is most likely occurring on the methyl portion of the isopropyl moiety.

### EXAMPLE 6. STRUCTURE ELUCIDATION OF METABOLITE M₈

As shown in FIG. 5(e), metabolite M₈ eluted at 40.2 min and gave a deprotonated molecule that contained ⁷⁹Br and ⁸¹Br, respectively, at *m*/*z* 310 and 312. The even value of *m*/*z* for the metabolite M₈ ion indicates that M₈ bears an odd number of nitrogen atoms. Under the MS/MS conditions used, precursor ions of *m*/*z* 310 fragmented to give ions of *m*/*z* 246 corresponding to [M-H-SO₂]⁻ (MS/MS spectrum not shown). Similarly, precursor ions of *m*/*z* 312 fragmented to give ions of *m*/*z* 248 corresponding to [M-H-SO₂]⁻ (MS/MS spectrum not shown). Loss of 64 Da suggests that sulfone is part of the metabolite and the fragment ion of *m*/*z* 248 suggests that bromo-biphenylamide is intact. Following ESI source H/D exchange, the molecular ion cluster shifted from 310/312 to 311/313 and confirmed the presence of an exchangeable hydrogen. Based on this information a structure of bromo-biphenylsulfonamide was proposed for metabolite M₈ (TABLE 1). The proposed structure was confirmed by synthesis of reference standard (PD 0408208). The retention time, electrospray mass spectrum, and the tandem mass spectrum of the synthetic standard was in close agreement with that obtained from the metabolite M₈ formed in vitro and in vivo.

### EXAMPLE 7. STRUCTURE ELUCIDATION OF METABOLITE M₉

As shown in FIG. 5(e), Metabolite M₉ eluted at 40.9 min and gave deprotonated molecule that contained ⁷⁹Br and ⁸¹Br, respectively, at *m*/*z* 410 and 412. The even value of *m*/*z* for the metabolite M₉ ion indicates that M₉ bears an odd number of nitrogen atoms.

FIG. 8 shows mass spectra of metabolite M₉ that were obtained from an LC-MS/MS (MS isolation of deprotonated molecules that contained ⁷⁹Br) using (a) on-line H/D exchange using a D₂O sheath liquid and an aqueous mobile phase, and (b) an aqueous mobile phase and an H₂O sheath liquid. Precursor ions of *m*/*z* 410 fragmented to give ions of *m*/*z* 247, 295 and 310 (FIG. 8(c)). The fragment ions of *m*/*z* 295 and 310 suggest that bromo-biphenylsulfonyl and bromo-biphenylsulfonylamino moieties are intact, respectively. Most likely the fragment ion at *m*/*z* 247 is associated with [295-SO]⁻. Based on these MS/MS data and the molecular weight information, a structure of PD 0200126-carboxylic acid was proposed (TABLE 1).

In addition to the molecular ion cluster at *m*/*z* 410/412 (H₂O sheath) and 411/413 (D₂O sheath), a molecular ion cluster at *m*/*z* 409/411 (H₂O sheath) and 410/412 (D₂O sheath) were observed in the LC-MS spectra. The latter two pairs most likely resulted from co-elution of metabolite M₁₀, co-elution of a metabolite undergoing a single deuterium exchange, the presence of some unexchanged M₉ or some combination of these factors. When D₂O was used as the sheath liquid, the majority of the molecular ion cluster from M₉ shifted by 1 Da to 411/413, which is in agreement with the proposed structure of PD 0200126-carboxylic acid (TABLE 1) in which two exchangeable hydrogens are present and one is removed during ionization.

FIG. 8 also shows the presence of ions of *m*/*z* 247 and 295 in both spectra (D₂O or H₂O sheath liquid), which indicates that the bromo-biphenylsulfonyl moiety is intact. Mass shift of the fragment ion at *m*/*z* 310 to 311 suggests the presence of an exchangeable hydrogen and that the amide moiety of bromo-biphenylsulfonamide is intact. The retention time, electrospray mass spectrum, and the tandem mass spectrum of the synthetic standard (PD 0169469, TABLE 1) was in close agreement with that obtained from the metabolite M₉ formed in vitro and in vivo.

### EXAMPLE 8. STRUCTURE ELUCIDATION OF METABOLITE M₁₀

As shown in FIG. 5(e), metabolite M_{10,} a minor UV component in the rabbit plasma, eluted at 41.0 min and showed a deprotonated molecule that contained ⁷⁹Br and ⁸¹Br, respectively, at *m*/*z* 409 and 411. The odd value of *m*/*z* for the metabolite M₁₀ ion indicates that M₁₀ bears an even number of nitrogen atoms. Molecular weight of 410, corresponding to a decrease of 16 amu over the molecular weight of PD 0200126 suggests that metabolite M₁₀ is most likely an amide metabolite. Comparison of the product ion spectrum of M₁₀ with that of PD 0200126 reference standard and the presence of product ions of *m*/*z* 295 and 310 suggests that bromo-biphenylsulfonyl and bromo-biphenylsulfonylamino moieties, respectively, are intact (MS/MS spectrum not shown). Unlike the parent or the carboxylic acid metabolite, M₁₀ undergoes fragmentation to give abundant ions corresponding to [M-H-SO₂]⁻ at *m*/*z* 345.

To confirm the structural assignment, ESI source H/D exchange experiment was carried out on this metabolite. The molecular ion cluster was observed to shift by 2 Da to 411/413 and indicated the presence of 3 exchangeable hydrogens. Upon CID, the precursor ion of *m*/*z* 411 gave fragment ions of *m*/*z* 295, 311 and 347 and confirmed the structural assignment. Finally, the retention time, electrospray mass spectrum, and the tandem mass spectrum of the synthetic standard (PD 0307442, TABLE 1) was in close agreement with that obtained from the metabolite M₁₀ formed in vitro and in vivo.

Another set of experiments were carried out to verify that ESI source H/D exchange is limited to Phase I modification or modification by addition of 1-4 exchangeable hydrogens, or if it is also applicable to phase II modification such as glucuronidation, which will result in addition of more than 5 exchangeable hydrogens. These experiments demonstrated that ESI source H/D exchange is applicable not only to discovery (non-radiolabeled parent drug) metabolite identification, but also to development studies (radiolabeled parent drug).

### EXAMPLE 9. STRUCTURE ELUCIDATION OF METABOLITE M₂

FIG. 9 shows mass spectra of metabolite M₂ that were obtained from an LC-MS utilizing (a) on-line H/D exchange using a D₂O sheath liquid and an aqueous mobile phase, and (b) an aqueous mobile phase and an H₂O sheath liquid, and also shows (c) a corresponding radiochromatogram. Following incubation of [¹⁴C]PD 0200126 with dog hepatocytes for 180 minutes, the major radioactive component representing more than 90 % of the total radioactivity was associated with PD 0200126-glucuronide (M₂) and minor amounts of the radioactivity were associated with M₉. As shown in FIG. 9, when subjected to ESI source H/D exchange, the molecular ion cluster observed at *m*/*z* 601/603 shifted to give ions at *m*/*z* 602, 603, 604, 605, 606, 607 and 608. Similarly, [M - 2H + Na]⁻ ions at *m*/*z* 623/625 shifted to 624, 625, 626, 627, 628 and 629. Presence of ions of *m*/*z* 606/608 shows that all six exchangeable hydrogens (with one removed for forming the ion) in PD 0200126-glucuronide are available for exchange and the precursors for these ions are most likely ions of *m*/*z* 601/603. Formation of the sodium adduct results in the removal of a second proton or deuterium and results in one less exchangeable hydrogen.

These observations show that M₂ is a glucuronide conjugate of PD 0200126 and not a conjugate of M₇. If M₂ had been a glucuronide conjugate of M₇, seven exchangeable hydrogens would be available for the exchange reaction. The proposed structure of M₂ was further confirmed by β-glucuronidase hydrolysis experiments. Structure elucidation of M₂ further confirmed that ESI source H/D exchange is not limited to phase I type biotransformation where the metabolic addition of exchangeable hydrogens is limited. Furthermore, the experimental set-up is not limited to discovery type metabolite identification studies, but will allow one to obtain structural information as well as quantitative radioactivity information about the metabolites (using the split-flow technique).

### CONCLUSIONS

The feasibility of liquid chromatography-mass spectrometer (LC-MS) equipped with an ESI source and deuterium oxide (D₂O) as the sheath liquid for performing on-line H/D exchange experiments has been demonstrated. Experiments show that although ESI source H/D exchange is rate limited and exchange efficiencies are not as high as samples dissolved in D₂O and using D₂O mobile phase, this method can be used to rapidly identify the number of exchangeable hydrogens of drugs and metabolites and to characterize them.

Hydrogen/deuterium exchange experiments allowed us to distinguish the parent drug from metabolite M₇, which had the same nominal mass and identical elemental composition. In addition, presence of the bromine atom―specifically the unique isotopic cluster distribution in the parent drug―allowed us to assess the effectiveness of the in ion source H/D exchange for obtaining tandem mass spectrometry information. Comparison of the product-ion-spectra obtained using the precursor ions formed following ESI source H/D exchange and solution (off-line) H/D exchange with deuterated mobile phase shows that structure elucidation of metabolites can be achieved by using precursor ions where the H/D exchange has not been driven to completion.

Our experiments also show that ESI source H/D exchange is not limited to metabolites formed by addition of smaller number of exchangeable hydrogens such as the ones associated with a Phase I biotransformation, but can be used to characterize a Phase II biotransformation, which usually results in metabolites formed by the addition of 5 or more exchangeable hydrogens (glucuronidation and glutathione but not sulfation). Thus, by using ESI source H/D exchange, unambiguous metabolite identification, which can be very useful in the early stages of drug discovery, can be achieved without the use of large-scale preparation for NMR or LC-NMR or performing solvent (off-line) H/D exchange involving the use of deuterated mobile phase.

It is to be understood that the above description is intended to be illustrative and not restrictive. Many embodiments will be apparent to those of skill in the art upon reading the above description. The scope of the invention should, therefore, be determined not with reference to the above description, but should instead be determined with reference to the appended claims, along with the full scope of equivalents to which such claims are entitled. The disclosures of all articles and references, including patent applications and publications, are herein incorporated by reference in their entirety and for all purposes.

## Claims

1. A method for performing hydrogen/deuterium exchange, the method comprising:
introducing a discrete sample in a liquid chromatograph-mass spectrometer having an electrospray ionization source, wherein the discrete sample includes a compound that can undergo hydrogen/deuterium exchange; and
supplying the electrospray ionization source with a sheath liquid, the sheath liquid comprised of a deuterated solvent so that when the sheath liquid contacts the compound in the electrospray ionization source, the compound undergoes hydrogen/deuterium exchange.

2. The method of claim 1, wherein the compound is a drug or a drug metabolite.

3. The method of claim 1, wherein the deuterated solvent includes D₂O.

4. The method of claim 1, wherein the discrete sample contains at least two compounds that will undergo hydrogen/deuterium exchange.

5. A method for **characterizing** a compound by hydrogen/deuterium exchange, the method comprising:
introducing a discrete sample into a column of a liquid chromatograph, the discrete sample containing at least one compound that can undergo hydrogen/deuterium exchange;
eluting the compound from the liquid chromatograph into an electrospray ionization source of a mass spectrometer; and
supplying the electrospray ionization source with a sheath liquid, the sheath liquid comprised of a deuterated solvent so that when the sheath liquid contacts the compound in the electrospray ionization source, the compound undergoes hydrogen/deuterium exchange.

6. The method of claim 5, further comprising eluting the compound from the liquid chromatograph into a radioactivity detector.

7. The method of claim 5, wherein the at least one compound is a drug or drug metabolite.

8. The method of claim 5, wherein the deuterated solvent includes D₂O.

9. The method of claim 5, wherein the discrete sample contains at least two compounds that will undergo hydrogen/deuterium exchange.
